# EUROPÄISCHE PATENTSCHRIFT

(11) **EP 3 033 162 B1**
(45) Veröffentlichungstag und Bekanntmachung des Hinweises auf die Patenterteilung: **25.03.2020**
(21) Anmeldenummer: 14754989.3
(22) Anmeldetag: 12.07.2014
(51) Int. Cl.: B01D 39/00

(54) **FILTER MIT VARIABLER POROSITÄT UND HERSTELLUNGSVERFAHREN**
FILTER HAVING A VARIABLE POROSITY AND METHOD FOR PRODUCING THE SAME
FILTRE À POROSITÉ VARIABLE ET PROCÉDÉ DE FABRICATION

(30) Priorität: 13.08.2013 DE 102013013396
(43) Veröffentlichungstag der Anmeldung: 22.06.2016
(73) Patentinhaber: Forschungszentrum Jülich GmbH, 52425 Jülich (DE)
(72) Erfinder: HOLDERER, Olaf, 82110 Germering (DE); APPAVOU, Marie-Sousai, 85748 Garching (DE); MACCARRONE, Simona, 80336 München (DE); RICHTERING, Walter, 52074 Aachen (DE); SCHERZINGER, Christine, 52072 Aachen (DE)
(86) Internationale Anmeldenummer: PCT/DE2014/000355
(87) Internationale Veröffentlichungsnummer: WO 2015/021953

(56) Entgegenhaltungen:
- DE-A1- 10 149 653
- DE-A1- 19 605 433
- US-A- 4 172 066
- US-A- 4 282 928

## Beschreibung

Die Erfindung betrifft einen Filter mit variabler Porosität sowie ein Herstellungsverfahren für diesen Filter.

### Stand der Technik

Ein Filter ist eine poröse Struktur zur Trennung zweier oder mehrerer unterschiedlicher Stoffe. Stoffe, deren kleinste Einheiten (Atome, Moleküle oder Partikel) durch die Poren passen, passieren den Filter. Stoffe, deren kleinste Einheiten größer sind als der Innendurchmesser der Poren, werden vom Filter zurückgehalten. Die Porengröße des Filters ist daher entscheidend dafür, welche Stoffe den Filter passieren und welche zurückgehalten werden.

Nachteilig ist bei herkömmlichen Filtern die Porengröße bei der Herstellung fest vorgegeben und kann im Nachhinein nicht mehr geändert werden. Um die Porengröße zu ändern, muss der Filter insgesamt gegen einen mit der richtigen Porengröße ausgetauscht werden.

Die DE 101 49 653 A1 zeigt eine Filtereinrichtung zur Aufnahme von Partikeln und Wasser, die ein poröses Material umschließt, dessen Poren als Quellräume für eine darin enthaltene quellfähige Substanz zur Wasseraufnahme dienen.

Die Offenlegungsschrift DE 196 05 433 A1 offenbart einen Nebenstrom-Filter für die Absorption von Wasser in hydraulischen Flüssigkeiten oder Motorölen, bei dem das Filtergehäuse einen Composit-Filter aufnimmt, welcher aus einer Hülse mit einer Wicklung aus Partikel-Filtermaterial besteht, worauf eine weitere Wicklung mit einer Composit-Sauglage, bestehend aus polymeren Superabsorbern, eingebettet in Vlies oder Gewebematerial, aufgebracht wird.

Aus dem US-Patent- 4,172,066 ist ein Verfahren bekannt, bei dem wasserabsorbierende, quellfähige Mikro-Gel Partikel in einem Lösungsmittel in die Poren einer porösen Struktur eingebracht sind um die Durchlässigkeit der Struktur zu reduzieren.

### Aufgabe und Lösung

Es ist daher die Aufgabe der Erfindung, einen Filter mit variabler Porosität zur Verfügung zu stellen.

Diese Aufgabe wird erfindungsgemäß gelöst durch einen Filter gemäß Hauptanspruch sowie durch ein Herstellungsverfahren gemäß Nebenanspruch. Weitere vorteilhafte Ausgestaltungen ergeben sich aus den darauf rückbezogenen Unteransprüchen.

### Gegenstand der Erfindung

Im Rahmen der Erfindung wurde ein Filter mit variabler Porosität entwickelt. Dieser Filter umfasst ein poröses Basismaterial mit einer Vielzahl durchgängiger Poren.

Erfindungsgemäß ist in den Poren jeweils ein Schaltmaterial angeordnet, das auf einen externen Steuereingriff seine räumliche Struktur und/oder Ausdehnung zu ändern und so den Steuereingriff in eine Änderung der Durchlässigkeit der Pore umzusetzen vermag.

Die Durchlässigkeit einer Pore ist immer als auf einen konkret zu filternden Stoff bezogen zu verstehen. Sie kann verändert werden, indem ihr durchgängiger Querschnitt verengt oder erweitert wird, d.h. ein größerer oder kleinerer Anteil ihrer Querschnittsfläche mit dem Schaltmaterial belegt ist. Ist das Schaltmaterial beispielsweise kugelförmig und quillt voluminös auf, belegt es einen größeren Anteil der Querschnittsfläche der Pore, und die Pore wird weniger durchlässig. Die Durchlässigkeit einer Pore für einen bestimmten zu filternden Stoff kann aber auch verändert werden, indem die Maschenweite einer vernetzten Struktur aus dem Schaltmaterial erhöht oder vermindert wird. Ist die Maschenweite größer als die Atome oder Moleküle des zu filternden Stoffs, kann dieser die Pore passieren, andernfalls nicht. Die Maschenweite lässt sich ändern, ohne dass dabei zwangsläufig auch der Anteil der Querschnittsfläche der Pore, der mit dem Schaltmaterial belegt ist, geändert werden muss.

Die Durchlässigkeit kann nicht nur zwischen zwei stabilen Zuständen "offen" und "geschlossen" umgeschaltet werden, sondern kann bei geeigneter Ausgestaltung des Schaltmaterials und Dosierung des externen Steuereingriffs auch Zwischenwerte annehmen. Der Steuereingriff muss nicht an allen Poren zugleich vorgelegt werden, sondern kann auch selektiv nur an bestimmten Poren vorgelegt werden.

Es wurde erkannt, dass sich die Durchlässigkeit des Filters für bestimmte Stoffe durch den externen Steuereingriff zum Einen quantitativ verändern lässt. Wenn der Stoff prinzipiell noch in der Lage ist, jede Pore zu durchdringen, aber die Wahrscheinlichkeit, dass eine gegebene, auf den Filter treffende Einheit (Atom, Molekül oder Partikel) des Stoffs auf eine Pore trifft, vermindert wird, passiert der Stoff nach wie vor den Filter, aber pro Zeiteinheit in geringerer Menge. Gleiches gilt, wenn der Stoff einige Poren nicht mehr passieren kann, andere jedoch nach wie vor. Zum Anderen kann die Durchlässigkeit des Filters aber auch qualitativ verändert werden in dem Sinne, dass ein Stoff, der ihn zuvor durchdringen konnte, dies nach dem externen Steuereingriff nicht mehr vermag. Umgekehrt kann mit ein und demselben erfindungsgemäßen Filter, dessen Durchlässigkeit schrittweise von kleineren zu größeren Stoffen erhöht wird, ein Gemisch aus vielen verschieden großen Komponenten in seine Bestandteile fraktioniert werden. Nach dem Stand der Technik waren hierfür mehrere Filter erforderlich.

Das Basismaterial weist mindestens in einem Teilbereich eine Porendichte von mindestens 3x10⁸ offenen Poren pro cm² auf, um einen hinreichenden Durchsatz durch den Filter zu gewährleisten. Bei einem Porenradius von beispielsweise ca. 100 nm entspricht dies einer Belegung von ca. 10 % der Fläche. Vorteilhaft sind also mindestens in einem Teilbereich des Basismaterials mindestens 10 % der Fläche mit offenen Poren belegt. Mit dem erfindungsgemäßen Herstellungsverfahren können diese vielen Poren in selbstorganisierter Weise mit dem Schaltmaterial funktionalisiert werden.

In einer besonders vorteilhaften Ausgestaltung der Erfindung ist das Schaltmaterial ein vernetztes Polymer mit variabler Maschenweite. Durch eine Verminderung der Maschenweite kann dann ein bestimmter Stoff davon abgehalten werden, den Filter weiterhin zu passieren, ohne dass der Durchsatz anderer Stoffe, dessen kleinste Einheiten deutlich kleiner sind als die neue Maschenweite, ebenfalls nennenswert herabgesetzt wird. Es bereitet insbesondere in Regelkreisen Schwierigkeiten, wenn durch einen externen Steuereingriff neben dem adressierten Parameter ungewollt noch weitere Parameter verändert werden.

Gemäß der Erfindung ist das Schaltmaterial ein Mikrogel, wobei das Schaltmaterial ein Kern-Schale-System ist, das durch die Schale in den Poren fixiert ist und durch den Kern die Durchlässigkeit der Pore zu ändern vermag. Durch diese Funktionstrennung kann die Durchlässigkeit in großem Umfang frei variiert werden, ohne dass Gefahr besteht, die Bindung des Mikrogels an die Poren oder aber eine zwischen Außenumfang des Kerns und Innenwand der Pore vorhandene Abdichtung aufzubrechen.

Vorteilhaft reagiert das Schaltmaterial auf eine Änderung des pH-Werts oder der Temperatur oder auf das Vorlegen eines Lösungsmittels mit einer Änderung seiner räumlichen Struktur und/oder Ausdehnung. In einer besonders vorteilhaften Ausgestaltung der Erfindung enthält es einen Absorber, der eine als Steuereingriff verwendete Strahlung in eine Energieform umwandelt, die ihrerseits die Änderung der räumlichen Struktur und/oder Ausdehnung auszulösen vermag. Beispielsweise kann im Kern des Mikrogels ein Gold-Nanopartikel eingeschlossen sein, das durch einen als Steuereingriff verwendeten Laserstrahl durch Anregung von Oberflächenplasmonen erwärmt wird. Dadurch kann der Kern über die Temperatur geheizt werden, bei der er kollabiert, d.h. seine Maschenweite deutlich vermindert oder gar die Pore komplett verschließt. Der Laserstrahl als Steuereingriff kann selektiv auf bestimmte Poren gerichtet werden, beispielsweise mit einem zweidimensionalen Scanner. Weist etwa in einer weiteren besonders vorteilhaften Ausgestaltung der Erfindung das Basismaterial Poren unterschiedlicher Größen auf, kann der Laserstrahl selektiv Poren einer bestimmten Größenklasse öffnen, um die Durchlässigkeit des Filters für einen bestimmten Stoff einzuschalten.

Vorteilhaft sind in den Poren verschiedene Schaltmaterialien angeordnet, die auf unterschiedliche externe Steuereingriffe reagieren. Auch wenn der Steuereingriff, etwa ein Lösungsmittel, nur makroskopisch am ganzen Filter vorgelegt werden kann, können dann nach wie vor Poren selektiv geöffnet werden. Beispielsweise kann das Schaltmaterial, das in Poren einer ersten Größe angeordnet ist, auf ein erstes Lösungsmittel und das Schaltmaterial, dass in Poren einer zweiten Größe angeordnet ist, auf ein zweites Lösungsmittel sensitiv sein. Wird das erste Lösungsmittel gegen das zweite Lösungsmittel getauscht, wird aus dem Filter mit Poren der ersten Größe ein Filter mit Poren der zweiten Größe.

Im Rahmen der Erfindung wurde auch ein Verfahren zur Herstellung des erfindungsgemäßen Filters entwickelt. Erfindungsgemäß wird bei diesem Verfahren das Schaltmaterial in einem Lösungsmittel in die Poren oder in sonstige durchgehende Öffnungen des porösen Basismaterials eingebracht und anschließend das Lösungsmittel verdampft.

Das Schaltmaterial kann beispielsweise durch einfaches Benetzen des Basismaterials mit dem Lösungsmittel in dessen Poren oder Öffnungen eingebracht werden. Es kann aber beispielsweise auch durch Aufschleudern (Spin-Coating) des Lösungsmittels auf das Basismaterial in dessen Poren oder Öffnungen eingebracht werden.

Es wurde erkannt, dass das Schaltmaterial auf diese Weise auch in eine große Zahl von Poren oder Öffnungen gleichzeitig in selbstorganisierter Weise eingebracht werden kann. Somit ist es nicht notwendig, seriell eine Pore oder Öffnung nach der anderen unter Anwendung nanotechnischer Manipulationsmethoden mit dem Schaltmaterial auszurüsten, was für einen Filter mit einer makroskopischen Anzahl Poren oder Öffnungen kaum praktikabel wäre.

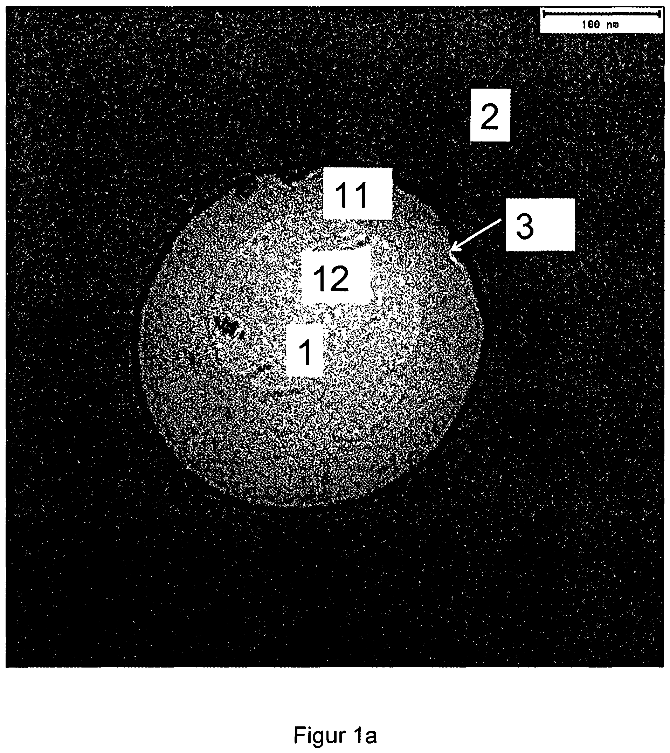

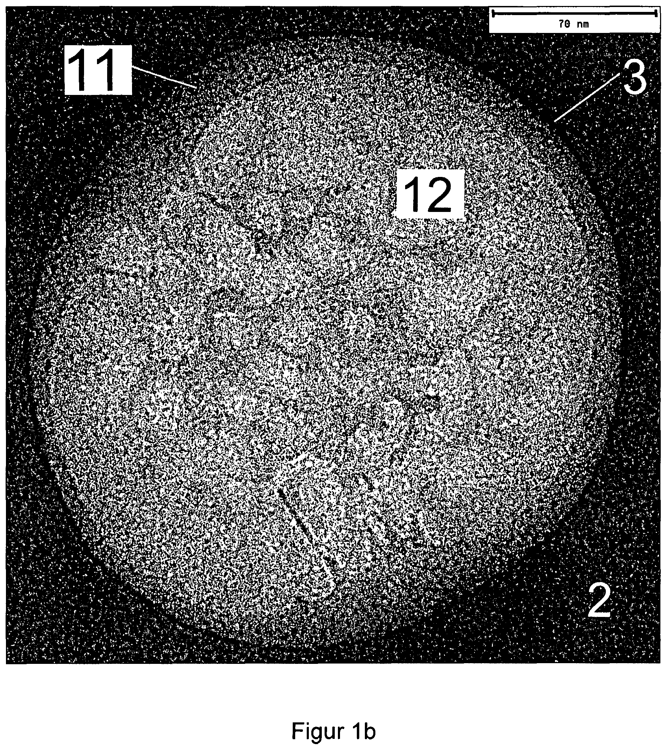

Unter "sonstigen durchgehenden Öffnungen" werden Öffnungen verstanden, die deutlich größer sind als die Einheiten (etwa Partikel), in denen das Schaltmaterial vorliegt. Die Öffnungen sind vorteilhaft mindestens doppelt so groß, bevorzugt mindestens fünfmal so groß und ganz besonders bevorzugt mindestens zehnmal so groß wie die Einheiten, in denen das Schaltmaterial vorliegt. Beispiele für solche Öffnungen sind die makroskopischen (Größenordnung 1 µm) Löcher in den porösen Formvar-Membranen, die als Substrat für TEM-Gitter dienen und für die Realisierung des in Figur 1 gezeigten Ausführungsbeispiels zweckentfremdet wurden.

Vorteilhaft ist in dem Lösungsmittel ein zusätzlicher Feststoff gelöst, der nach dem Verdampfen des Lösungsmittels den Zwischenraum zwischen Außenumfang des Schaltmaterials und der inneren Wand der Pore oder Öffnung undurchgängig macht. Dies entkoppelt die erforderliche Größe, die die kleinsten Einheiten des Schaltmaterials (Atome, Moleküle oder Partikel) haben müssen, vom Innendurchmesser der Poren oder Öffnungen im Basismaterial. Wenn beispielsweise das Basismaterial unterschiedlich große Poren oder Öffnungen enthält, kann ein und dasselbe Schaltmaterial durch den zusätzlichen Feststoff an die unterschiedlichen Innendurchmesser der Poren angepasst werden. Der zusätzliche Feststoff kann in einer Pore oder Öffnung des Basismaterials insbesondere eine Membran bilden, in die eine Einheit des Schaltmaterials (etwa ein Partikel) eingebettet ist. Die Dicke der Membran sollte in etwa dem Durchmesser der Partikel des Schaltmaterials entsprechen (± 25 %), damit das Schaltmaterial nicht vollständig von der Membran überwachsen wird. Vorteilhaft bildet der zusätzliche Feststoff in der Pore oder Öffnung eine 50-200 nm dicke Membran.

Der zusätzliche Feststoff kann insbesondere eine große Öffnung mit einer undurchlässigen Membran überziehen, die nur an den Stellen Poren aufweist oder neu bildet, an denen sich auch das Schaltmaterial befindet. Die Verengung der großen Öffnung zu einer oder mehreren wesentlich kleineren Poren und die Belegung dieser Poren mit dem Schaltmaterial lassen sich dann vorteilhaft in einem Arbeitsgang durchführen und laufen selbstorganisiert ab. Es ist also keine individuelle Manipulation von Poren und/oder Einheiten des Schaltmaterials notwendig, die nicht nur wegen der kleinen Abmessungen technisch anspruchsvoll wäre, sondern auch seriell durchzuführen wäre und daher insgesamt sehr lange dauern würde. Stattdessen kann eine große Zahl von Öffnungen auf einmal zu mit dem Schaltmaterial funktionalisierten Poren verengt werden.

In einer besonders vorteilhaften Ausgestaltung der Erfindung ist der zusätzliche Feststoff ein im Basismaterial enthaltener Stoff, und/oder es wird ein Lösungsmittel gewählt, das das Basismaterial angreift. Dann schließt die nach dem Verdampfen des Lösungsmittels gebildete Abdichtung zwischen der Innenwand der Pore oder Öffnung und dem Schaltmaterial stoffschlüssig an die Innenwand an, so dass sie dort gut haftet.

Gemäß der Erfindung wird das Schaltmaterial als System aus einem Kern und einer diesen Kern allseits umgebenden Schale in die Poren eingebracht, und anschließend wird der Kern freigelegt. Dadurch ist zum Einen der Kern vor Beschädigungen geschützt, während das Schaltmaterial über seine Schale an der Innenwand der Pore fixiert wird, insbesondere wenn hierbei ein zusätzlicher gelöster Feststoff zum Einsatz kommt. Zum Anderen kann durch das nachträgliche Freilegen des Kerns auch Feststoff, der sich unerwünschter Weise auf der Schale abgelagert hat und die Pore unabhängig vom Zustand des Schaltmaterials dauernd undurchgängig macht, entfernt werden. Die Aufgabenteilung zwischen Schale und Kern ermöglicht es zudem, beide Bestandteile weitgehend unabhängig voneinander auf ihre jeweilige Aufgabe zu optimieren.

Sämtliche für den Filter und seine Komponenten gegebene Offenbarung gilt ausdrücklich auch als für das Verfahren offenbart. Sämtliche für das Verfahren und seine Schritte gegebene Offenbarung gilt ausdrücklich auch als für den Filter offenbart.

### Spezieller Beschreibunasteil

Nachfolgend wird der Gegenstand der Erfindung anhand von Figuren erläutert, ohne dass der Gegenstand der Erfindung hierdurch beschränkt wird. Es ist gezeigt:
- Figur 1:: Partikel des Schaltmaterials in einer Pore im Basismaterial, gehalten von einer Membran aus dem Stoff, aus dem auch das Basismaterial besteht.
- Figur 2:: Ausschnitt aus der Filteroberfläche mit mehreren Poren.

Figur 1a zeigt ein Partikel 1 des Schaltmaterials, aufgenommen mit einem hochauflösenden Transmissionselektronenmikroskop (TEM). Dieses Partikel 1 ist ein Mikrogelpartikel mit einer Schale 11 und einem Kern 12. Es wurde in eine Membran 2 aus Formvar eingefasst, die die Schale 11 gegen die Innenwand eines Loches in der Ursprungsmembran (Loch größer als Bildausschnitt, Rand des Loches nicht im Bild zu sehen) des Basismaterials Formvar abdichtet. Das Mikrogel-Partikel ist somit in eine Pore 3 des neuen Formvar-Filmes eingebettet. Als Basismaterial wurde eine poröse Formvar-Membran, die üblicherweise als Substrat für TEM-Gitter dient, zweckentfremdet. Eine Vielzahl von Partikeln 1 wurde in einem Lösungsmittel, das zu 80 % aus Methanol und zu 20 % aus Wasser besteht, auf diese Membran aufgebracht. Indem das Formvar von dem Methanol angelöst wurde, wurde ein Teil des Formvar in dem Lösungsmittel gelöst. Beim Trocknen des Lösungsmittels überspannte die Membran 2 aus dem gelösten Formvar das Loch des ursprünglichen Formvar-Films. In einer neu gebildeten Pore 3 des neuen Filmes wurde formschlüssig das in Figur 1a sichtbare Partikel 1 des Schaltmaterials eingefasst.

Der Kern 12 des Partikels 1 besteht aus dem Polymer Poly(N,N,diethylacrylamid) (PDEAAM). Die Schale 11 des Partikels 1 besteht aus poly(N-isopropylacrylamid) (PNIPAM). In dem Lösungsmittel ist durch den Ko-Nichtlöslichkeitseffekt die Schale kollabiert, der Kern aber weiterhin gequollen. Die Schale 11 ist beim Trocknen des Lösungsmittels aufgebrochen und hat dabei den aus dem gequollenen Zustand kommenden Kern 12 freigelegt. Der Kern ist im getrockneten Zustand weder vollständig gequollen noch vollständig kollabiert, sondern im Wesentlichen eine etwas gestreckte Polymerschicht. Er wird sich im Lösungsmittel vor allem in der Richtung quer zur Membran, in der er mechanisch nicht eingespannt ist, aufquellen oder kollabieren lassen.

Der Kern 12 ist deutlich weitmaschiger als die Schale 11. Seine Maschenweite und damit auch die Durchlässigkeit der Pore lässt sich durch einen externen Steuereingriff regulieren. Wird etwa an dem Filter ein Lösungsmittel vorgelegt, das das Basismaterial und die Membran 2 nicht angreift, so kann der Kern 12 zum Kollaps gebracht werden. Dabei verringert sich die Maschenweite, bis hin zu dem Punkt, dass die Pore 3 komplett verschlossen wird.

Der Skalenbalken rechts oben in Figur 1a entspricht einer Länge von 100 nm.

Figur 1b ist eine Zoom-Aufnahme eines weiteren Partikels. Der in Figur 1 gezeigte Filter ist sowohl ein erfindungsgemäßer Filter als auch ein Produkt des erfindungsgemäßen Verfahrens. Der Skalenbalken rechts oben in Figur 1b entspricht einer Länge von 70 nm.

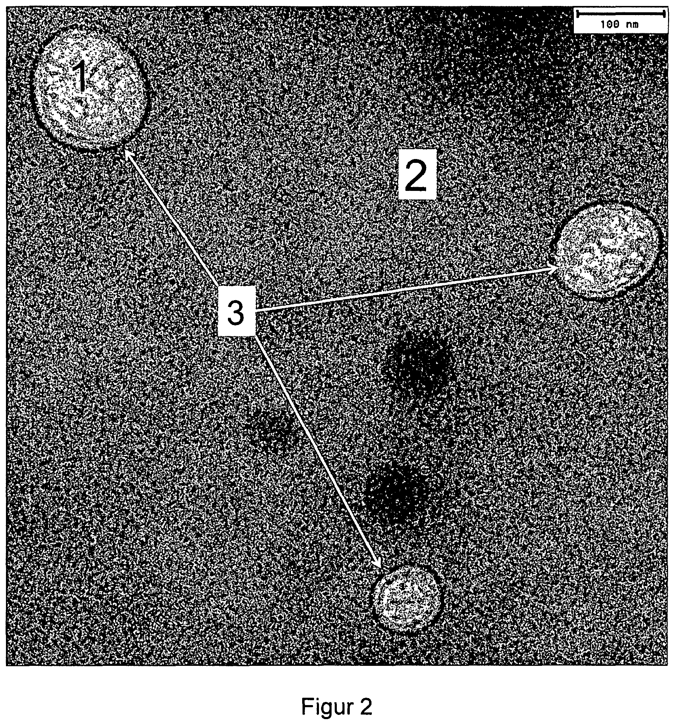

Figur 2 zeigt einen Ausschnitt des Filters. In diesem Ausschnitt sind mehrere Poren 3 im Basismaterial 2 sichtbar. Die hell dargestellten Poren 3 sind jeweils wie in Figur 1 gezeigt mit einem Partikel 1 versehen, so dass die Durchlässigkeit des Kerns 12 die Durchlässigkeit der jeweiligen Pore reguliert. Es lassen sich in einer dichten Packung bis zu etwa 90 % der Fläche des Basismaterials 2 mit Poren 3 und Partikeln 1 versehen, wobei mit steigender Zahl der Poren die Stabilität des Films 2 tendenziell abnimmt. Vorteilhaft sind mindestens 10 % der Fläche belegt, damit der Filter einen technisch sinnvollen Durchsatz hat. Über die Konzentration der Partikel 1 in dem Lösungsmittel kann reguliert werden, ob im Wesentlichen alle Poren 3 mit Partikeln 1 belegt werden oder ob auch Poren 3 offen bleiben sollen.

Der Skalenbalken rechts oben in Figur 2 entspricht einer Länge von 100 nm.

## Patentansprüche

1. Filter mit variabler Porosität, umfassend ein poröses Basismaterial mit einer Vielzahl durchgängiger Poren,
wobei in den Poren jeweils ein Schaltmaterial angeordnet ist, das auf einen externen Steuereingriff seine räumliche Struktur und/oder Ausdehnung zu ändern und so den Steuereingriff in eine Änderung der Durchlässigkeit der Pore umzusetzen vermag, **dadurch gekennzeichnet, dass** das Basismaterial mindestens in einem Teilbereich eine Porendichte von mindestens 3x10⁸ offenen Poren pro cm² aufweist, und dass das Schaltmaterial ein Mikrogel ist, wobei das Schaltmaterial ein Kern-Schale-System ist, das durch die Schale in den Poren fixiert ist und durch den Kern die Durchlässigkeit der Pore zu ändern vermag, und dass das Schaltmaterial als System aus einem Kern und einer diesen allseits umgebenden Schale in die Poren eingebracht und anschließend der Kern freigelegt wird.

2. Filter nach Anspruch 1,
**dadurch gekennzeichnet, dass**
das Schaltmaterial ein vernetztes Polymer mit variabler Maschenweite ist.

3. Filter nach einem der Ansprüche 1 oder 2,
**dadurch gekennzeichnet, dass**
das Schaltmaterial auf eine Änderung des pH-Werts oder der Temperatur oder auf das Vorlegen eines Lösungsmittels mit einer Änderung seiner räumlichen Struktur und/oder Ausdehnung reagiert.

4. Filter nach einem der Ansprüche 1 bis 3,
**dadurch gekennzeichnet, dass**
das Schaltmaterial einen Absorber enthält, der eine als Steuereingriff verwendete Strahlung in eine Energieform umwandelt, die ihrerseits die Änderung der räumlichen Struktur und/oder Ausdehnung auszulösen vermag.

5. Filter nach einem der Ansprüche 1 bis 4,
**dadurch gekennzeichnet, dass**
das Basismaterial Poren unterschiedlicher Größen aufweist.

6. Filter nach einem der Ansprüche 1 bis 5,
**dadurch gekennzeichnet, dass**
in den Poren verschiedene Schaltmaterialien angeordnet sind, die auf unterschiedliche externe Steuereingriffe reagieren.

7. Verfahren zur Herstellung eines Filters nach einem der Ansprüche 1 bis 6,
**dadurch gekennzeichnet,**
**dass** das Schaltmaterial in einem Lösungsmittel in die Poren oder in sonstige durchgehende Öffnungen des porösen Basismaterials eingebracht und anschließend das Lösungsmittel verdampft wird.

8. Verfahren nach Anspruch 7,
**dadurch gekennzeichnet, dass**
in dem Lösungsmittel ein zusätzlicher Feststoff gelöst ist, der nach dem Verdampfen des Lösungsmittels den Zwischenraum zwischen Außenumfang des Schaltmaterials und der inneren Wand der Pore oder Öffnung undurchgängig macht.

9. Verfahren nach Anspruch 8,
**dadurch gekennzeichnet, dass**
der zusätzliche Feststoff ein im Basismaterial enthaltener Stoff ist und/oder ein Lösungsmittel gewählt wird, das das Basismaterial angreift.

## Claims

1. A filter having a variable porosity, comprising a porous base material having a plurality of continuous pores, wherein, in each case, a switching material is arranged in the pores, which switching material is capable of changing its spatial structure and/or expansion upon an external control intervention and thus converting the control intervention into a change in the permeability of the pore,
**characterized in that**
the base material, at least in a subarea, has a pore density of at least 3x10⁸ open pores per cm² , and that the switching material is a microgel, wherein the switching material is a core-shell-system, which is fixed in the pores by the shell and is capable of changing the permeability of the pore by the core, and that the switching material as system consisting of a core and a shell surrounding it on all sides is introduced into the pores and then the core is exposed.

2. The filter according to claim 1,
**characterized in that**
the switching material is a cross-linked polymer having a variable mesh size.

3. The filter according to any one of claims 1 or 2,
**characterized in that**
the switching material reacts to a change of the pH value or of the temperature or to the presence of a solvent with a change in its spatial structure and/or expansion.

4. The filter according to any one of claims 1 to 3,
**characterized in that** the switching material contains an absorber converting a radiation, which is used as a control intervention, into an energy form which, for its part, is capable of triggering the change of the spatial structure and/or expansion.

5. The filter according to any one of claims 1 to 4,
**characterized in that** the base material has pores of different sizes.

6. The filter according to any one of claims 1 to 5,
**characterized in that** different switching materials are arranged in the pores and react to different external control interventions.

7. A method for manufacturing a filter according to any one of claims 1 to 6,
**characterized in that**
the switching material in a solvent is introduced into the pores or into other through openings of the porous base material and then the solvent is evaporated.

8. The method according to claim 7,
**characterized in that**
an additional solid is dissolved in the solvent, which solid, after evaporation of the solvent, makes the space between the outer periphery of the switching material and the inner wall of the pore or opening impermeable.

9. The method according to claim 8,
**characterized in that**
the additional solid is a substance contained within the base material and/or a solvent is selected, which attacks the base material.

## Revendications

1. Filtre à porosité variable, comprenant une matière de base poreuse ayant une pluralité de pores interconnectés,
dans lequel
dans les pores, est mise, respectivement, une matière de commutation, qui, sur une intervention extérieure de commande, modifie sa structure et/ou son étendue spatiale et ainsi permet de transformer l'intervention de commande en une variation de la perméabilité des pores,
**caractérisé en ce que** la matière de base a, au moins dans une région partielle, une densité de pore d'au moins 3x10⁸ pores ouverts par cm², et **en ce que** la matière de commutation est un microgel, la matière de commutation étant un système noyau-coquille, qui est immobilisé dans les pores par la coquille et qui permet, par le noyau, de modifier la perméabilité des pores et **en ce que** la matière de commutation est introduite dans les pores, sous la forme d'un système composé d'un noyau et d'une coquille entourant celui-ci de tous côtés, et ensuite le noyau est mis à découvert.

2. Filtre suivant la revendication 1,
**caractérisé en ce que**
la matière de commutation est un polymère réticulé à ouverture de maille variable.

3. Filtre suivant l'une des revendications 1 ou 2,
**caractérisé en ce que**
la matière de commutation réagit à une variation du pH ou de la température ou à la présence d'un solvant par une variation de sa structure et/ou de son étendue spatiale.

4. Filtre suivant l'une des revendications 1 à 3,
**caractérisé en ce que**
la matière de commutation contient un absorbant, qui transforme un rayonnement utilisé comme intervention de commande en une forme d'énergie, qui, pour sa part, permet de déclencher la variation de la structure et/ou de l'étendue spatiale.

5. Filtre suivant l'une des revendications 1 à 4,
**caractérisé en ce que**
la matière de base a des pores de dimensions différentes.

6. Filtre suivant l'une des revendications 1 à 5,
**caractérisé en ce que**
des matières de commutation différentes, qui réagissent à des interventions extérieures de commande différentes, sont mises dans les pores.

7. Procédé de fabrication d'un filtre suivant l'une des revendications 1 à 6,
**caractérisé**
**en ce que** l'on introduit la matière de commutation dans un solvant dans les pores ou dans des ouvertures traversantes autres de la matière de base poreuse et on évapore ensuite le solvant.

8. Procédé de fabrication suivant la revendication 7,
**caractérisé en ce que**
l'on dissout dans le solvant une matière solide supplémentaire, qui, après l'évaporation du solvant, empêche de passer dans l'espace intermédiaire entre le pourtour extérieur de la matière de commutation et la paroi intérieure du pore ou de l'ouverture.

9. Procédé de fabrication suivant la revendication 8,
**caractérisé en ce que**
la matière solide supplémentaire est une substance contenue dans la matière de base et/ou on choisit un solvant, qui attaque la matière de base.
